# FASCICULE DE BREVET EUROPEEN

(11) **EP 1 607 808 B1**
(45) Date de publication et mention de la délivrance du brevet: **25.08.2010**
(21) Numéro de dépôt: 04013926.3
(22) Date de dépôt: 15.06.2004
(51) Int. Cl.: G04C 3/14, G01D 18/00

(54) **Procédé de synchronisation de l'affichage analogique d'une piece d'horlogerie avec une base de temps électronique de celle-ci**
Verfahren zur Synchronisierung der analogen Anzeige einer Uhr mit einem elektronischen Taktgeber
Method for the synchronization of the analog display of a timepiece provided with an electronic timebase

(43) Date de publication de la demande: 21.12.2005
(73) Titulaire: ASULAB S.A., 2074 Marin (CH)
(72) Inventeur: Bernasconi, Ermanno, 2000 Neuchâtel (CH); Buehler, Roger, 2400 Le Locle (CH); Dinger, Rudolph, 2024 Saint-Aubin (CH); Farine, Pierre-André, 2000 Neuchâtel (CH)
(74) Mandataire: Surmely, Gérard

(56) Documents cités:
- EP-A- 0 841 538
- EP-A- 0 952 426
- EP-A- 0 969 266
- EP-A- 1 256 855
- EP-A- 1 422 581
- US-B1- 6 454 458

## Description

La présente invention concerne un procédé de synchronisation de l'affichage analogique d'une pièce d'horlogerie dont le mouvement est équipé d'une base de temps électronique. Cette base de temps est notamment munie d'un oscillateur à quartz bien connu de l'homme du métier. L'affichage analogique comprend un indicateur analogique couplé en rotation à une première roue du mouvement horloger. Dans le cadre de la présente invention, cette première roue est associée à un capteur de proximité et présente au moins une ouverture dans son plateau qui est réalisé de préférence en matériau électriquement conducteur. Le capteur de proximité est agencé pour détecter l'ouverture de la première roue et plus particulièrement pour déterminer la position d'un demi-axe géométrique de référence défini par cette ouverture.

En particulier, l'indicateur analogique est un indicateur de l'heure.

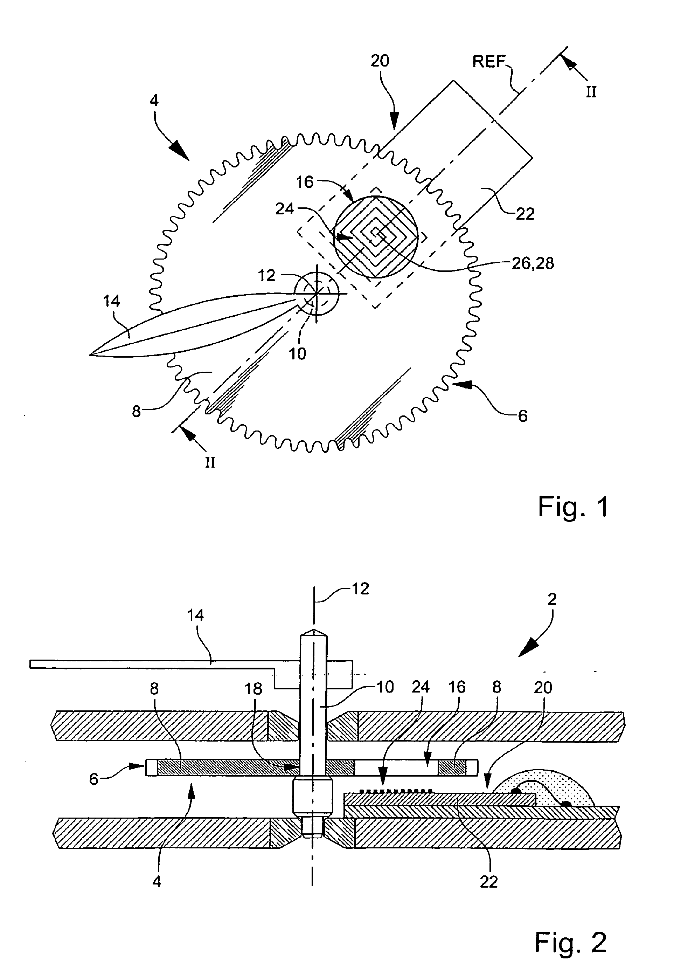

Le principe de détection du demi-axe défini par une ouverture prévue dans la roue couplée à un indicateur analogique est décrit en particulier dans le document EP 0 952 426. L'agencement du capteur de proximité relativement à la roue qui lui est associé et son fonctionnement seront brièvement décrits ci-après à l'aide des figures 1 à 3.

Le mouvement horloger 2 comporte une roue dentée 4 avec une denture 6 définie sur le bord externe du plateau 8 de cette roue. La roue 4 comprend en outre un arbre 10 définissant un axe géométrique de rotation 12. Le mouvement horloger 2 est associé à un affichage analogique comprenant un indicateur rotatif 14, en particulier une aiguille, montée fixement sur l'arbre 10. L'indicateur 14 peut servir à indiquer l'heure, la minute ou toute autre information utile prévue. Dans le cadre de la présente invention, l'indicateur 14 appartient à un affichage analogique de l'heure courante, le but étant de permettre une synchronisation de cet indicateur avec une base de temps électronique du mouvement horloger. L'indicateur 14 est solidaire en rotation du plateau 8.

Le plateau 8 présente une ouverture circulaire 16. On notera que le contour de cette ouverture peut être différent, notamment rectangulaire. Un capteur inductif 20, formé d'un circuit intégré 22 et d'une bobine plane en spiral 24 disposée sur une face du circuit intégré, est agencé relativement au plateau 8 de manière que la bobine plane 24 soit au moins partiellement au-dessous de l'ouverture 16 dans au moins une position angulaire donnée de la roue 4. On notera que la bobine peut être reliée au circuit électronique sans être agencée sur ce dernier.

De préférence, comme représenté à la figure 1, il est prévu que l'axe magnétique central 26 de la spirale formant la bobine plane 24 passe sensiblement par le centre géométrique 28 de l'ouverture 16 dans une position angulaire donnée de la roue 4. L'ouverture 16 définit un demi-axe géométrique de référence REF de la roue 4. Ce demi-axe part de l'axe géométrique 12 et passe par le centre 28 de l'ouverture circulaire 16. Le capteur inductif 20 qui forme un capteur de proximité est agencé pour déterminer la position du demi-axe de référence REF.

Le capteur 20 comprend par exemple un circuit électronique du type décrit dans le document EP 0 746 100, avec un oscillateur à relaxation différentiel. Ce type de capteur fournit un signal alternatif dont la fréquence varie en fonction de la proximité de matériaux électriquement conducteurs relativement à la bobine de détection. L'ouverture 16 engendre une variation de matière à proximité de la bobine 24 lorsque la roue 4 tourne. On peut dans certains cas aussi prévoir un capteur ayant une autre architecture électronique basée sur un oscillateur harmonique.

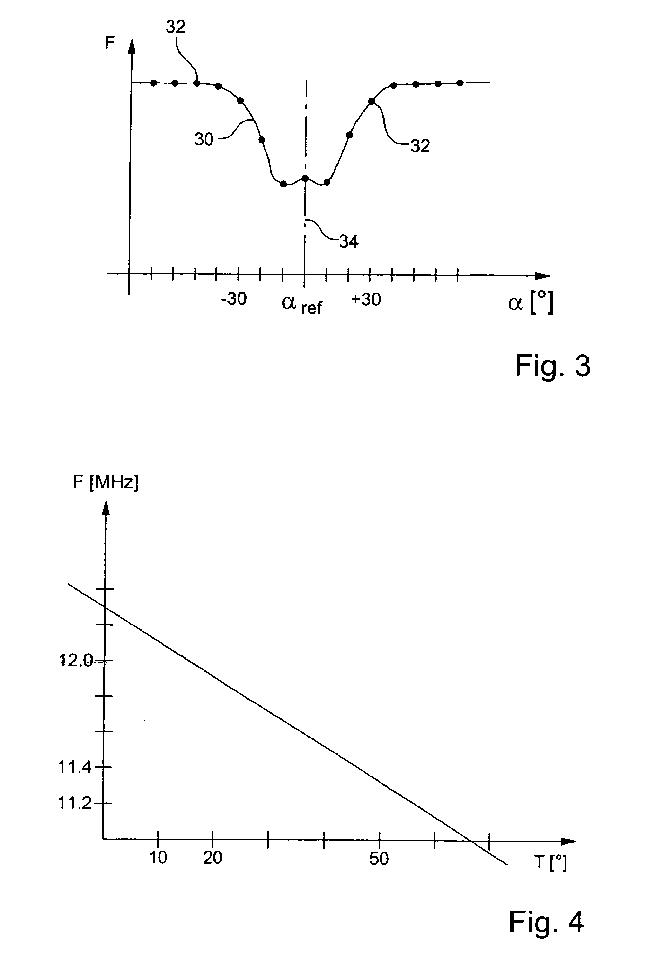

Comme représenté schématiquement à la figure 3, le capteur 20 fournit un signal de mesure dont les points de mesure 32 obtenus en fonction de la position angulaire α du demi-axe de référence REF définissent un graphe 30 sensiblement symétrique par rapport à un axe géométrique 34. La position angulaire de cet axe 34 correspond à un angle α_{REF} de la roue 4 lorsque son demi-axe de référence REF croise l'axe magnétique central 26 de la bobine plane 24. On effectuera suffisamment de mesures pour obtenir une densité de points de mesure 32 permettant de distinguer la pente négative et la pente positive du graphe 30, de manière à pouvoir déterminer la position de l'axe de symétrie 34 de ce graphe 30.

Après avoir effectué les mesures nécessaires pour déterminer l'évolution du signal de mesure du capteur lorsque l'ouverture passe au-dessus de la bobine du capteur, des moyens électroniques de traitement des résultats de mesure permettent de déterminer l'angle α_{REF} et donc la position correspondante de l'aiguille 14.

On remarquera que les dimensions de la bobine 24 sont de préférence de l'ordre de 1 mm². Lorsque le diamètre de la roue présentant l'ouverture de détection de sa position est relativement petit, cette ouverture présente alors de préférence une surface définissant un secteur annulaire dont la dimension radiale est inférieure à la dimension tangentielle, la dimension radiale étant alors inférieure à la dimension correspondante de la bobine de détection. Dans ce dernier cas, les mesures permettant d'établir le graphe 30 et de déterminer la position de l'axe de symétrie 34 nécessitent que la roue 4 effectue un parcours angulaire d'environ 90°. Dans le cas plus favorable présenté aux figures 1 et 3, le parcours angulaire nécessaire est déjà de l'ordre de 60°. Ces valeurs sont des valeurs minimum correspondant au cas où la position de l'indicateur 14 correspond sensiblement à la position théorique donnée par la base de temps électronique du mouvement horloger. Si la position de l'indicateur associé à la roue de détection se trouve, notamment dû à des chocs reçus par la pièce d'horlogerie, dans une position relativement éloignée de la position théorique susmentionnée, le parcours angulaire nécessaire à la détection du demi-axe de référence REF de cette roue sera supérieur aux valeurs données ci-avant.

Ces considérations sont importantes dans le cadre de la présente invention où les inventeurs ont mis en lumière un problème de précision dans la détermination de l'angle de référence α_{REF}, c'est-à-dire de la position angulaire du demi-axe de référence REF, et ceci en particulier pour l'indicateur des heures lorsqu'une synchronisation entre l'affichage analogique et le temps courant donné par la base de temps électronique est effectuée selon le mode de synchronisation proposé dans le document EP 0 952 426. Ce document propose pour vérifier la position du demi-axe REF, c'est-à-dire pour synchroniser l'affichage analogique à la base de temps électronique du mouvement d'horlogerie, d'attendre le passage prévu de l'ouverture de la roue en question dans la région du capteur, plus précisément d'attendre que le demi-axe de REF défini par cette ouverture balaie la bobine de détection du capteur de proximité. Si l'ouverture n'est pas détectée, il est prevu dans EP 0 952 426 un entraînement rapide de la roue pour la retrouver.
Or, les inventeurs ont mis en lumière des imprécisions dans la détermination de la position angulaire de référence α_{REF} dont la cause a son origine dans une variation de la fréquence mesurée par le capteur en fonction de la température ambiante. Comme représenté à la figure 4, on observe une diminution de la fréquence de mesure F du capteur inductif avec une augmentation de la température. La diminution observée est de l'ordre de 20 kHz par °C. Les chiffres mentionnés sur les axes de cette figure 4 sont donnés à titre d'exemple non limitatif. Pour une roue entraînée par un moteur pas à pas horloger, on a observé une variation maximale de la fréquence du signal de mesure d'environ 80 kHz pour un pas du moteur. Ainsi, une variation de la température d'environ 4°C correspond dans tous les cas à une variation de fréquence semblable à celle correspondant à un pas du moteur lorsque l'ouverture de la roue passe en regard du capteur inductif. Ceci a pour conséquence d'introduire une erreur de mesure lorsque la température varie. Dès que la température varie de 2°C ou plus, une erreur quant à la détermination de la position exacte de l'indicateur est engendrée par cette variation de température. On remarquera que l'indicateur des heures effectue un parcours angulaire de 60° en deux heures et un parcours angulaire de 90° en trois heures. Sur une période aussi longue, une variation de la température de la pièce d'horlogerie peut dépasser largement les 2°C de sorte que la détermination de l'angle de référence α_{REF} est faussée.

La présente invention, après avoir mis en lumière le problème susmentionné et exposé les raisons à l'origine de ce problème, a pour but d'apporter une solution permettant de le résoudre.

A cet effet, la présente invention a pour objet un procédé de synchronisation de l'affichage analogique de l'heure courante d'une pièce d'horlogerie, équipée d'un mouvement ayant une base de temps électronique, avec cette base de temps, cet affichage analogique comprenant au moins un indicateur analogique qui est couplé en rotation à une roue présentant au moins une ouverture, cette roue étant associée à un capteur de proximité inductif agencé pour détecter ladite ouverture et pour déterminer la position d'un demi-axe de référence défini par le centre de cette ouverture et le centre de ladite roue, ce procédé de synchronisation comprenant les étapes suivantes :
- enclenchement de manière automatique et périodique d'un mode de synchronisation dans lequel ledit indicateur analogique est entraîné dans un mode d'avance accéléré jusqu'à ce que ladite ouverture de ladite roue passe en regard dudit capteur de proximité;
- détermination de la position angulaire réelle dudit demi-axe de référence par des moyens électroniques recevant un signal de mesure fourni par ledit capteur de proximité;
- calcul, pour ledit affichage analogique de ladite pièce d'horlogerie, de la position angulaire théorique dudit demi-axe de référence en fonction d'une heure courante de référence donnée par ladite base de temps électronique; et
- entraînement dudit indicateur analogique jusqu'à ce que la position angulaire réelle dudit demi-axe de référence corresponde à ladite position angulaire théorique.

II résulte des étapes du procédé de synchronisation décrit ci-dessus, grâce à l'entraînement de l'indicateur analogique dans un mode d'avance accéléré, une détermination précise de la position du demi-axe de référence de la roue de détection dans le cas d'un enclenchement automatique et périodique, étant donné que l'avance accélérée prévue permet de réduire considérablement le temps de passage de l'ouverture de la roue au-dessus de la bobine de détection du capteur. La succession des mesures de fréquence par le capteur est ainsi accélérée et peut notamment être réalisée pour l'ensemble des mesures nécessaires dans un intervalle de temps inférieur à cinq secondes. Dans une telle situation, la température est généralement stable et son influence devient totalement négligeable.

Le dessin annexé à la présente description de l'invention comporte :
- une figure 1, déjà décrite, montrant schématiquement l'agencement prévu pour la détermination de la position angulaire d'un indicateur;
- une figure 2, déjà décrite, correspondant à une section selon la ligne II - II de la figure 1,
- une figure 3 montrant schématiquement la variation de la fréquence du signal de mesure fourni par un capteur de proximité en fonction d'une variation de matière au-dessus de ce capteur,
- une figure 4, déjà décrite, donnant un graphe de la variation de la fréquence du signal de mesure fourni par un capteur de proximité, pour une position angulaire donnée de l'ouverture prévue dans une roue de détection, en fonction de la température de mesure, et

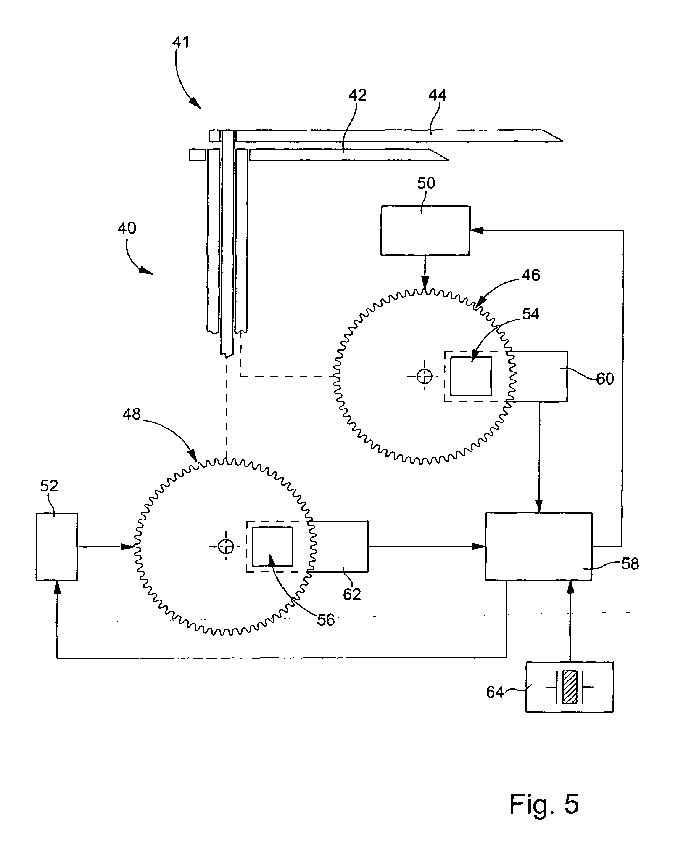

- la figure 5 représente schématiquement une pièce d'horlogerie dans laquelle le procédé de synchronisation selon l'invention est mis en oeuvre.

A l'aide de la figure 5, on décrira ci-après de manière schématique une pièce d'horlogerie 40 permettant la mise en oeuvre du procédé de synchronisation selon l'invention.

La pièce d'horlogerie 40 comprend un affichage analogique 41 de l'heure courante. Cet affichage comprend un indicateur de l'heure 42 et un indicateur de la minute 44. Les indicateurs 42 et 44, formés notamment par des aiguilles conventionnelles, sont couplés en rotation respectivement à une première roue 46 et une deuxième roue 48. Ces roues 46 et 48 sont respectivement entraînées par deux moteurs pas à pas 50 et 52. Comme décrit précédemment de l'aide de la figure 1, les roues 46 et 48 présentent une ouverture 54, respectivement 56 dans leur plateau constitué par un matériau électriquement conducteur. A chacune des première et deuxième roues est associé un capteur inductif de proximité 60, respectivement 62 pour détecter l'ouverture 54, respectivement 56 de manière à déterminer précisément la position angulaire de chacun des deux indicateurs 42 et 44.

Le procédé de détection de la position angulaire d'une roue, en particulier de son demi-axe de référence REF tel que décrit précédemment à l'aide des figures 1 à 3 ne sera pas à nouveau décrit ici. Les capteurs 60 et 62 sont représentés de manière tout à fait schématique, sans la bobine de détection. La pièce d'horlogerie 40 comprend un circuit électronique 58 agencé pour recevoir les signaux de mesure des capteurs 60 et 62, pour traiter ces signaux de mesure de manière à déterminer la position angulaire du demi-axe de référence de chacune des deux roues 46 et 48. Finalement la pièce d'horlogerie 40 comprend une base de temps électronique 64 munie de manière conventionnelle d'un oscillateur à quartz. La base de temps 64 fournit au circuit électronique 58 l'heure courante de référence, cette heure courante de référence définissant une heure courante théorique pour la synchronisation des aiguilles 42 et 44 de l'affichage analogique 41.

Le circuit 58 comprend également des moyens compteurs permettant de compter le nombre de pas effectués par chacun des deux moteurs 50 et 52. Ainsi, dans le mode de synchronisation de l'affichage analogique 41 à l'heure courante de référence donnée par la base de temps 64, le circuit électronique 58 enregistre l'évolution du parcours angulaire de la roue dont on cherche à déterminer la position angulaire du demi-axe de référence passant par le centre de son ouverture de manière à connaître la position angulaire de ce demi-axe de référence une fois l'angle de référence α_{REF} déterminé par ce circuit 58.

Selon l'invention, lorsque le mode synchronisation est enclenché automatiquement à une heure journalière ou hebdomadaire donnée, la roue 46 couplée mécaniquement à l'indicateur de l'heure 42 est entraînée par le moteur 50 de manière accélérée relativement à la vitesse angulaire normale de la roue 46. Comme déjà mentionné, ceci permet de résoudre efficacement le problème de perturbation dans la détection précise du demi-axe de référence, perturbation engendrée lors d'une variation de la température.

Lorsque le mode de synchronisation est enclenché, le procédé de synchronisation pour l'indicateur de l'heure comprend les étapes suivantes :
- entraînement de l'indicateur de l'heure 42 dans un mode d'avance accéléré jusqu'à ce que l'ouverture 54 de la roue 46 passe en regard du capteur de proximité 60 associé à cette roue 46,
- détermination de la position angulaire réelle du demi--axe de référence de cette roue 46 par des moyens électroniques, notamment le circuit 58, qui reçoivent un signal de mesure du capteur 60, notamment à une certaine fréquence,
- calcul par ces moyens électroniques, pour l'affichage analogique 41 de la pièce d'horlogerie 40, de la position angulaire théorique de ce demi-axe de référence en fonction de l'heure courante de référence donnée par la base de temps électronique 64,
- entraînement de l'indicateur de l'heure 42 jusqu'à ce que la position angulaire réelle dudit demi-axe de référence de la roue 46 corresponde à ladite position angulaire théorique.

Dans une variante la détection du demi-axe de référence de la roue 48 couplée à l'indicateur des minutes est également réalisée avec une avance accélérée de cette roue 48. Toutefois, comme le temps nécessaire pour parcourir un angle de 60 à 90° pour l'aiguille des minutes correspond à 10 à 15 minutes, il est possible en général de détecter la position angulaire de l'indicateur des minutes 44 dans un mode d'avance normal. Par contre, on ne peut plus garantir dans ce cas que la vitesse angulaire soit suffisante pour éviter une perturbation due à une rapide variation de la température lors des mesures servant à la détermination de la position angulaire.

Finalement, dans une variante de mise en oeuvre du procédé de l'invention, la pièce d'horlogerie est mise dans un mode de synchronisation dans la deuxième moitié de la période nocturne et par exemple à 2 heures du matin.

## Revendications

1. Procédé de synchronisation de l'affichage analogique de l'heure courante (41) d'une pièce d'horlogerie (40), équipée d'un mouvement ayant une base de temps électronique (64), avec cette base de temps, cet affichage analogique comprenant au moins un indicateur analogique (42) qui est couplé en rotation à une roue (46; 48) présentant au moins une ouverture (54; 56), cette roue étant associée à un capteur de proximité inductif (60; 62) agencé pour détecter ladite ouverture et pour déterminer la position d'un demi-axe de référence défini par le centre de cette ouverture et le centre de ladite roue, ce procédé de synchronisation comprenant les étapes suivantes :
- enclenchement de manière automatique et périodique d'un mode de synchronisation dans lequel ledit indicateur analogique (42) est entraîné dans un mode d'avance accéléré jusqu'à ce que ladite ouverture de ladite roue passe en regard dudit capteur de proximité;
- détermination de la position angulaire réelle dudit demi-axe de référence par des moyens électroniques recevant un signal de mesure fourni par ledit capteur de proximité;
- calcul, pour ledit affichage analogique (41) de ladite pièce d'horlogerie, de la position angulaire théorique dudit demi-axe de référence en fonction d'une heure courante de référence donnée par ladite base de temps électronique (64); et
- entraînement dudit indicateur analogique jusqu'à ce que la position angulaire réelle dudit demi-axe de référence corresponde à ladite position angulaire théorique.

2. Procédé de synchronisation selon la revendication 1, **caractérisé en ce que** ledit indicateur analogique est un indicateur de l'heure.

3. Procédé de synchronisation selon la revendication 1 ou 2, **caractérisé en ce que** ladite pièce d'horlogerie est mise dans ledit mode de synchronisation de manière journalière ou hebdomadaire.

4. Procédé de synchronisation selon la revendication 3, **caractérisé en ce que** ledit mode de synchronisation est enclenché dans la deuxième moitié de la période nocturne.

## Claims

1. Method of synchronising the analogue display of the current time (41) of a timepiece (40), fitted with a movement having an electronic time base (64), with said time base, said analogue display including at least one analogue indicator (42), which is coupled in rotation to a wheel (46; 48) having at least one aperture (54; 56), said wheel being associated with a proximity sensor (60; 62) arranged for detecting said aperture and for determining the position of a reference semi-axis defined by said aperture, said synchronisation method comprising the following steps:
- setting on automatically and periodically a synchronisation made in which said analogue indicator (42) is driven in an accelerated advance mode until said aperture of said wheel passes opposite said proximity sensor,
- determining the real angular position of said reference semi-axis by electronic means receiving a measurement signal provided by said proximity sensor;
- calculating, for said analogue display (41) of said timepiece, the theoretical angular position of said reference semi-axis as a function of a reference current time given by said electronic time base (64),
- driving said analogue indicator until the real angular position of said reference semi-axis corresponds to said theoretical angular position.

2. Synchronisation method according to claim 1, **characterised in that** said analogue indicator is an hour indicator.

3. Synchronisation method according to claim 1 or 2, **characterised in that** said timepiece is set into said synchronisation mode daily or weekly.

4. Synchronisation method according to claim 3, **characterised in that** said synchronisation mode is set on in the second half of the nocturnal period.

## Patentansprüche

1. Verfahren zum Synchronisieren der analogen Anzeige (41) der laufenden Zeit eines Zeitmessgeräts (40), das mit einem eine elektronische Zeitbasis (64) aufweisenden Uhrwerk ausgerüstet ist, mit dieser Zeitbasis, wobei diese analoge Anzeige wenigstens einen analogen Anzeiger (42) umfasst, der beim Drehen mit einem wenigstens eine Öffnung (54; 56) aufweisenden Rad (46; 48) gekoppelt ist, wobei dieses Rad einem induktiven Nahsensor (60; 62) zugeordnet ist, der vorgesehen ist, um diese Öffnung zu erfassen und die Position einer durch den Mittelpunkt dieser Öffnung und durch den Mittelpunkt des Rads definierten Referenzhalbachse zu bestimmen, wobei dieses Synchronisierungsverfahren folgende Schritte umfasst:
- automatisches und periodisches Einschalten eines Synchronisierungsmodus, in dem der analoge Anzeiger (42) in einem Modus mit beschleunigtem Vorrücken angetrieben wird, bis die Öffnung des Rades am Nahsensor vorbeiläuft;
- Bestimmen der effektiven Winkelposition der Referenzhalbachse durch elektronische Mittel, die ein vom Nahsensor geliefertes Messsignal empfangen;
- Berechnen, für die analoge Anzeige (41) des Zeitmessgeräts, der theoretischen Winkelposition der Referenzhalbachse in Abhängigkeit von einer durch die elektronische Zeitbasis (64) gegebenen Referenzzeit; und
- Antreiben des analogen Anzeigers, bis die effektive Winkelposition der Referenzhalbachse der theoretischen Winkelposition entspricht.

2. Synchronisierungsverfahren nach Anspruch 1, **dadurch gekennzeichnet, dass** der analoge Anzeiger ein Zeitanzeiger ist.

3. Synchronisierungsverfahren nach Anspruch 1 oder 2, **dadurch gekennzeichnet, dass** das Zeitmessgerät täglich oder wöchentlich in den Synchronisierungsmodus gesetzt wird.

4. Synchronisierungsverfahren nach Anspruch 3, **dadurch gekennzeichnet, dass** der Synchronisierungsmodus in der zweiten Hälfte der Nachtperiode eingeschaltet wird.
